# EUROPEAN PATENT APPLICATION

(11) **EP 1 921 219 A1**
(43) Date of publication of application: **14.05.2008**
(21) Application number: 06381048.5
(22) Date of filing: 08.11.2006
(51) Int. Cl.: E04B 1/88, E04B 1/90, E04B 1/84

(54) **Sound damping and fire restistant insulating panel and its manufacturing procedure**

(71) Applicant: Lloveras Calvo, Juan, Barcelona (ES)
(72) Inventor: Lloveras Calvo, Juan, Barcelona (ES)
(74) Representative: Esteban Perez-Serrano, Maria Isabel

(57) **Abstract**

Insulating panel which comprises a core implemented in silica fibre which has individual metallic sheets bonded on both surfaces, forming an assembly capable of supporting temperatures in the order of 1200°C, as well as offering good sound damping, the assembly does not surpass 18mm in thickness overall. For the manufacture thereof the metallic sheets are scraped on their bonding surface, a primer or corrosion inhibitor is applied to them, and then they are dried with a stream of air at 80°C, finally a preferably reactive polyurethane glue is applied on which the metallic sheets are laid applying pressure, finally allowing it to cure.

## Description

### OBJECT OF THE INVENTION

The object of the present invention is a sound damping and fire resistant insulating panel, which is formed by a central layer manufactured from silica fibre, having metallic sheets bonded on both surfaces of the central core or blanket.

Also the object of the present invention is the manufacturing procedure necessary to be able to carry out the performance of the manufacturing procedure of the panel object of the invention.

The present panel is characterized in its high level of thermal insulation, having an exceptional resistance to chemical attack, also noteworthy is its high mechanical strength at high temperatures, being able to withstand continuous exposure to temperatures above 1200° C.

The present panel is characterized in its structural rigidity resulting from the adhesion of individual metallic sheets on both surfaces of the central blanket or core of silica fibre.

The panel is also characterized in the high level of sound damping it offers, resulting from the association of the silica fibre with the structural characteristics that the bonded metallic sheets provide.

Therefore, the present invention falls within the ambit of the insulating panels with a high fire resistance rating and that also have a high level of sound damping.

### BACKGROUND OF THE INVENTION.

Up to now various panels are known which offer different qualities relative to their sound absorption capacity, or fire resistance capacity.

For example, in the patent ES 2115900 a sound absorption panel is disclosed which has a central core of mineral fibre, which has individual fibreglass sheets bonded on each surface, and on one of them is bonded additionally a watertight sheet based on Kraft paper on which an aluminium sheet is laid. No mention is made of its thermal insulation properties.

In the Spanish Utility Model ES 1060278U a sandwich panel for construction is described formed of a central core which has external layers bonded on both surfaces. The central core consists of a cellular material comprising aluminium foam with a small titanium content, utilized as an expansion agent or foam agent. This sandwich panel is stable up to temperatures equal to 550° C.

There are other insulating panels which use glass or mineral fibre as constructive element for their core or interior, however the temperature they can stand is 450° C and 600° C if the exposure is short. Moreover, these panels have a substantial bulk or thickness, which is between 5cm and 20cm, a most undesirable feature speaking from the point of view of its construction. In addition they offer no properties as regards sound damping.

Thus, it is an object of the present invention to overcome the preceding drawbacks, achieving a panel which withstands continuous exposure to temperatures of more than 1200° C, the thickness of which is clearly reduced with respect to similar panels that are being used at the moment, and wherein substantial sound damping is also achieved. All of this is achieved with the panel object of the present invention.

### DESCRIPTION OF THE INVENTION.

The proposed invention of a sound damping and fire resistant insulating panel, object of the invention, basically comprises a panel which is formed by a central core implemented with a silica fibre blanket, on which individual metallic sheets are bonded on both surfaces. The blanket implemented with silica fibre is highly flexible, maintaining its mechanical strength intact up to 850° C, being able to withstand continuous exposure at temperatures above 1200° C.

In addition, Silica fibre is characterized in having a high acoustic attenuation, that is, its behaviour is good as a sound damping element.

Therefore, silica fibre is a suitable material for the construction of fire resistant and sound damping panels.
Given the flexibility of the silica fibre blanket, and with the object of providing it with greater rigidity which facilitates the handling and erection thereof, individual metallic sheets are bonded on both surfaces.

The metallic sheets only have the task of providing the Silica fibre blanket with a certain structural rigidity in its constitution in panels, not serving as collaborating element in relation with the fire resistant properties thereof.

The metallic sheets do collaborate and can improve the sound damping properties if they have a certain configuration. Thus, if for example on one of the two sheets a series of perforations are made, this configuration signifies a clear enhancement in the sound damping coefficient of the panel than if one of the sheets were simply not perforated.

Therefore, the sheets should not have a certain thickness, but rather it should be sufficient to achieve a structural rigidity of the panel. The material of the sheets can be aluminium, for its low weight, and for its high aesthetic effect, it being possible to employ sheets of galvanized iron or steel.

In those situations where it is desired to equip the panels with a certain weight, with the object of preventing them being moved by the wind, for example use in building roofs and the like, at least one of the two sheets which covers the central blanket or core of Silica fibre, is made of galvanized iron or steel, which provides the panel with sufficient weight to impede the possibility of it being easily blown away.

In the end, through the properties of the Silica fibre blanket or core, the final thickness of the panel does not surpass 18mm, which makes it especially suitable for the lining of large rooms, the aluminium sheets having a thickness of between 0.1mm and 1.5mm.

Among the countless applications that the insulating panel object of the invention can have, in the event that galvanized iron sheets are used as the metallic sheets, it can serve as an element for lining Transformer Substations, given the insulating, fire resistant, and sound damping properties it has, by using galvanized iron as the metal, screening of the electromagnetic radiations is also achieved. And should an improved acoustic attenuation be desired, the closest surface to the source of radiation would be perforated by means of regularly distributed perforations.

### DESCRIPTION OF THE DRAWINGS.

To supplement the description that will be given below and with the object of assisting in a better understanding of the characteristics of the invention, this descriptive specification is accompanied with a set of drawings wherein, by way of illustration and not restrictively, the most significant details of the invention are represented.

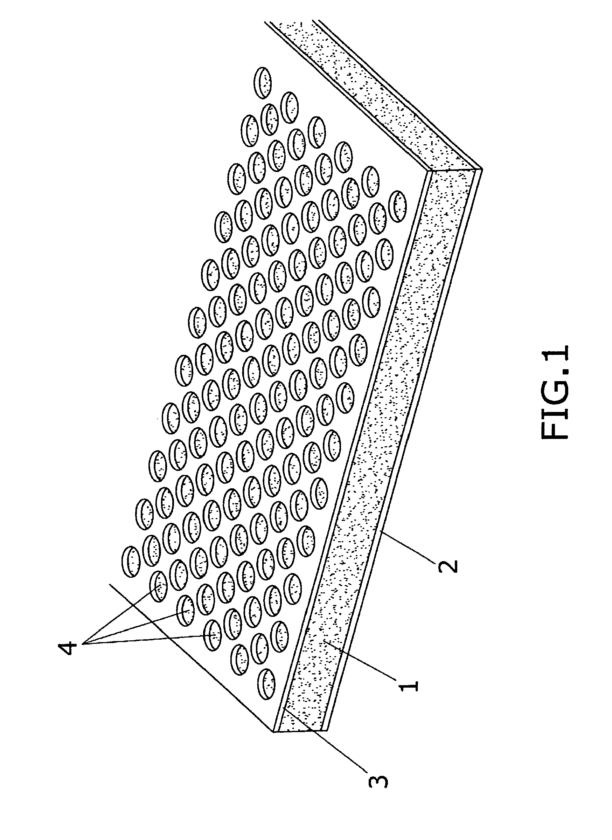

Figure 1 shows a representation in perspective of part of a panel object of the invention, wherein the constructional characteristics thereof are observed.

### PREFERRED EMBODIMENT OF THE INVENTION,

In light of the aforementioned figures a description is provided below of a preferred mode of embodiment of the invention as well as the explanation of the drawings.

In figure 1, it can be observed that the insulating panel object of the invention is formed by a core (1) implemented in Silica fibre, shaped in blanket form and that has metallic sheets (2) and (3) bonded on both surfaces.

Specifically on one of the surfaces of the silica fibre blanket which forms the core (1), a sheet (1) is laid which will be mounted on the non-visible surface of the panel. This sheet can be made of Aluminium or any other metallic material. In the event that it is desired to provide the panel with a certain weight, a sheet of galvanized iron or steel can be used, so that it increases its weight and prevents it being blown off, through the action of the wind.

On the other surface of the Silica fibre blanket, which will be the visible surface of the panel, a dressed metallic sheet (3) will be laid, since it is the visible part of the panel, it is preferred that aluminium be used, for its high aesthetic value.

Both sheets (2) and (3) serve to give structural rigidity to the blanket with the silica fibre core (1), and improve the sound damping provided by the silica fibre core.

Nevertheless, and with the object of improving the acoustic attenuation achieved by the panel, on one of the sheets which cover the core, specifically the visible sheet (3), a series of perforations (4) are made which by leaving the silica fibre core in direct contact with the exterior, and forming an alternating surface of metallic material and silica fibre achieves a substantial acoustic attenuation.

With regard to the procedure that should be followed in the manufacture of the panel object of the invention, this consists of the following stages or steps:
- Sanding or scraping the metallic sheets on the surface that will be bonded to the silica fibre core.
- Applying a primer or polymer as inhibitor of future corrosion, by means of a spray appliance or by roller.
- Drying the primer by means of a hot-air stream that is at a temperature of about 80° C.
- Application of adhesive glue.
- Mounting the sheets on each of the blanket surfaces that form the silica fibre core.
- Application of pressure.
- Curing for several days.
In the event that the glue used for the bonding of the metallic sheets to the silica fibre core is a reactive polyurethane glue, the application of the glue is carried out by means of a hot-melt arrangement which progressively melts the glue, making it pass through a machine with rollers which are at a temperature of between 120° and 130°, or by means of a spreading sill making it fall as a film, or by means of a spray gun. The application of the glue by means of a gun is carried out by ribbon or by spray. Subsequently the metallic sheets are laid on both surfaces and pressure applied by means of a two roll calender, allowing the bonding to cure for several days.

It is not considered necessary to extend this description further for any expert in the field to understand the scope of the invention and the advantages that arise thereof.

The materials, form size and layout of the elements and can be subject to variation provided they do not alter the essential nature of the invention.

The terms in which this specification has been expressed are to be taken always in the broadest sense and in a non restrictive way.

## Claims

**1.** Sound damping and fire resistant insulating panel **characterized in that** it comprises a blanket which forms the core implemented in silica fibre, individual metallic sheets being bonded on both surfaces.

**2.** Sound damping and fire resistant insulating panel according to the first claim, **characterized in that** the metallic sheets are aluminium sheets.

**3.** Sound damping and fire resistant insulating panel according to the first claim, **characterized in that** at least one of the metallic sheets, that which is mounted on the non-visible surface of the panel, is made of galvanized iron or steel.

**4.** Sound damping and fire resistant insulating panel according to the first or second claim, **characterized in that** the sheet mounted on the visible surface has a series of perforations.

**5.** Sound damping and fire resistant insulating panel according to the fourth claim, **characterized in that** the perforations made in the metallic sheet of the visible surface are regularly distributed.

**5.** Sound damping and fire resistant insulating panel according to the second claim, **characterized in that** the thickness of the metallic sheets varies between 0.1mm and 1 . 5mm.

**6.** Sound damping and fire resistant insulating panel according to the fifth claim, **characterized in that** the insulating panel has an overall thickness that does not surpass 18mm.

**7.** Sound damping and fire resistant insulating panel according to any of the preceding claims, **characterized in that** the temperature which the panel is able to stand in a continuous fashion is around 1200°C.

**8.** Manufacturing procedure of the previously claimed panel, **characterized in that** it comprises the following stages:
• Sanding or scraping the metallic sheets on the surface that will be bonded to the silica fibre core.
• Applying a primer or polymer as inhibitor of future corrosion, by means of a spray gun or by roller.
- Drying the primer by means of a hot-air stream which is at a temperature of about 80°C.
• Application of adhesive glue.
• Mounting the sheets on each of the blanket surfaces that form the silica fibre core.
• Application of pressure.
• Curing for several days.

**9.** Manufacturing procedure according to claim 8, **characterized in that**, in the event that the glue used for the bonding of the metallic sheets on the silica fibre core is a reactive polyurethane glue, the application of the glue is carried out by means of a hot-melt arrangement element which progressively melts the glue, applying it either by means of a machine with rollers which are at a temperature between 120° and 130°, or by means of a spreading sill making a film fall or by means of a spray gun, subsequently mounting the metallic sheets on both surfaces and applying pressure by means of a two roll calender, allowing the adhesion to cure for several days.

**10.** Manufacturing procedure according to claim 8, **characterized in that** the application of the glue by means of a gun is carried out either by means of a ribbon or by spraying.
